(19) Europäisches Patentamt

European Patent Office

Office européen des brevets

(11) **EP 1 285 587 A1**

(12) **EUROPEAN PATENT APPLICATION**

(43) Date of publication:
**26.02.2003 Bulletin 2003/09**

(21) Application number: **01000112.1**

(22) Date of filing: **18.04.2001**

(51) Int Cl.[7]: **A23L 1/03**, A23L 1/0524,
A23L 1/06, A23L 1/24,
A23L 1/28, A23L 2/02,
A23L 2/04, A23L 2/08,
A23L 2/52, A23L 2/84

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **DSM N.V.**
**6411 TE Heerlen (NL)**

(72) Inventors:
• **Grassin, Catherine, Marie, Thérese**
**59113 Séclin (FR)**

• **Fauquembergue, Pierre, Clément, Louis**
**59113 Séclin (FR)**

(74) Representative: **Ringeling, Patricia Louise et al**
**DSM Patents & Trademarks,**
**Wateringseweg 1,**
**P.O. Box 1**
**2600 MA Delft (NL)**

(54) **Process for making fruit juice concentrates**

(57)    The present invention relates to a fast process for the production of clear fruit juice concentrates. The process comprises adding a high activity pectin lyase preparation to the crushed fruit. The invention further relates to clear juice concentrates and clear juices made thereof.

EP 1 285 587 A1

## Description

### Field of the invention

The present invention relates to a process for making clear fruit juices and concentrates. More specifically, it relates to a process for making clear apple juices and apple juice concentrates.

### Background

Conventional processes for making fruit juice are lengthy. For instance, a process for making a conventional apple juice concentrate typically comprises the following steps:

- washing the apples
- crushing the apples
- macerating the apples for 30-70 min at ambient temperature
- pressing the apples for at least 90 min
- the resulting raw apple juice (yield max. 90-92% (w/w)) is pre-concentrated until 20-22° Brix
- this pre-concentrate is depectinised at 50°C for one hour minimum under the addition of enzymes
- the depectinised pre-concentrate is ultra filtrated at 50°C
- and subsequently concentrated until 70°C Brix

The quality of the concentrate is dependent on storage conditions, storage time and sanitary state of the apples. In general, concentrates from stored apples wil have to be reworked after some time because of its instability with respect to haze and colour. Reworking involves dilution of the concentrate, treatment with active carbon and reconcentration.
Concentrates from apples which were stored outside for some weeks before processing will have low colour stability and will be high in patulin content. These storage problems could be seriously diminished if more apples could be processed in a shorter time without affecting the yield. To date no such process is available.

### Detailed description

The present invention relates to a process for preparing a fruit juice concentrate. The process comprises:

- adding a high activity enzyme preparation which comprises at least 8000 pectin lyase units per gram of dry material to crushed fruit
- pressing the crushed fruit to separate off a raw juice fraction
- optionally, subjecting the raw juice fraction to pressurisation
- followed by filtration and concentration of the juice fraction to a desired Brix value

The whole procedure takes about 3 to 4 hours instead of 7 to 8 hours as in the conventional process.
This shows just one advantage of the process according to the invention: a shorter processing time.
Another advantage is that the yield of the raw juice is higher: 94-96% (w/w) versus 92-94% (w/w) for a conventional process.
These two advantages together result in an improved plant productivity, because more apples may be processed in the same time, with a higher yield. In this way, storage problems are seriously diminished.
The optional pressurisation step of the raw juice is included to get a further advantage: the concentrate or juice will be even more stable in terms of microbiology, colour and turbidity.
Yet another advantage of the process according to the invention is that the same equipment may be used as in the conventional processes.
The new process is very suitable for apple processing, but may also be used for making clear juices or concentrates from other fruits, such as pear, red berries, grapes.
After an optional washing step, the fruit is subjected to grinding, crushing or otherwise destroying the integrity of the fruit, thus obtaining a fruit pulp. The actual method is not critical and those of skill in the art could readily think of alternatives for the above processes.
The high activity enzyme preparation to which the fruit is exposed should contain high amounts of pectin lyase activity. It may be added in any formulation which is suitable to the person skilled in the art, be it as a liquid, powder, pellet or other formulation. A very suitable formulation is a granulate.
Granulation processes are known in the art. A preferred granulation process is a multi-stage drying system in which an aqueous solution containing pectin lyase is dried and granulated at the same time in an atomisation multi-effects tower. In this system, granulation is initiated by the recycling and agglomeration of fine particles coming from cyclones in atomization. The carrier material is maltodextrin. The use of a core is optional. The granulate consists of a dry extract of pectin lyase containing concentrate and carrier. Its composition is 80 to 90% dry matter from the concentrate and 10 to 20% maltodextrin carrier. The granulate should contain at least 8000 units of pectin lyase per gram dry granulate material.

The solution containing pectin lyase may conveniently be obtained from the growth medium of a microorganism. The microorganism which is used as pectin lyase source may be a wild type strain or a genetically modified strain, as long as it is able to produce pectin lyase. Preferably a fungal strain is used, more preferably an Aspergillus is used, most preferred is a strain from Aspergillus niger. Pectin lyase genes and overexpression systems for pectin lyase genes have been described, e.g. in EP 0 278 355.

If a pectin lyase containing growth medium is used for granulation, also other compounds, especially pectinolytic enzymes, such as pectin esterase, polygalacturonase and arabinosidases may be present in the final granulate. Also in this case, the granulate should contain at least 8000 units of pectin lyase per gram of dry granulate material.

In a next step the enzymatically treated fruit pulp is pressed. A juice fraction (the raw juice fraction) and a pomace fraction are generated and subsequently separated.

The optional pressurisation step of the raw juice before pre-concentration is included to get a concentrate or juice which is even more stable in terms of microbiology, colour and turbidity. The insertion of a pressurisation step is especially advantageous in the case of non-red fruit. During pressurisation an elevated molecular oxygen concentration is applied to the juice fraction for a period sufficiently long to oxidize phenolic compounds present in the juice. The molecular oxygen concentration is preferable >1 ppm, more preferably > 4 ppm, most preferably > 5 ppm. Any oxygen containing gas may be used for pressurisation. Suitable gases include, but are not limited to, molecular oxygen or ozone, preferably air is used.

An elevated molecular oxygen concentration in the juice is obtained by:

- pressurising a volume representing at least 1/10 of the total volume of the juice at an elevated pressure of >1 bar, preferably >2 bar, more preferably >3 bar, using preferably air as pressurisation gas for about 1-2 minutes in a pressurisation tank while the remainder of the juice is kept in the holding tank, followed by
- mixing the pressurised part of the juice with the remainder of the juice in the holding tank, so that every few minutes the oxygen concentration of the juice in the holding tank is increased,

and repeating these steps for a total time between 10-120 minutes, preferably 20-120 minutes and more preferably 30-120 minutes.

Alternatively, an elevated molecular oxygen concentration in the juice is obtained by passing the juice batch-wise through the pressurisation tank and maintaining each batch at an elevated pressure of >1 bar, preferably >2 bar, more preferably >3 bar, for more than 2, preferably more than 3 minutes, prior to flotation.

Optionally, also a polyphenol oxidase and/or a fining agent is added to the juice fraction. In this way a further reduction of the polyphenol and mycotoxin content of juices and concentrates may be obtained.

A preferred process comprises the following steps:

- washing the apples
- crushing the apples with simultaneous addition of the high activity pectin lyase granulate comprising at least 8000 units of pectin lyase
- pressing the apples for about 70 min
- optionally, the resulting raw apple juice (yield max. 94-96 w/w%) is pressurised with air (5 to 6 bar) for at least 15 minutes
- the pressurised raw apple juice is concentrated until 20-22° Brix
- this pre-concentrate is treated with amylase and active carbon
- and subsequently concentrated until 70°C Brix

**Pectin lyase measurements**

Pectin lyase activity is measured by spectrophotometry. Pectin lyase catalyses eliminative cleavage of the $\alpha$ 1,4-glycosidic bond between the methylesterified galacturonic acid residues in pectin or pectate to give $\Delta$ 4,5 unsaturated oligosaccharides at the non-reducing end of the product. Conjugation of the double bond formed with the carbonyl function in C6 has an absorption in U.V. at 235 nm which characteristics is used for assaying the pectin lyase. One unit is the quantity of enzyme catalysing the breakdown of one linkage endo $\alpha$ 1-4 galacturonosidyl (C6 methyl ester) forming one micromole of unsaturated product $\Delta$ 4,5 in one minute according to defined assay conditions. Pectin lyase activity is the number of units per gram of product.

**Reagents:**

- a 250ml buffer solution citric acid 0.1M added with disodium dihydrogeno-phosphate, $2H_2O$ 0.2M for pH 5.5 (water addition for 1 liter).
- substrate is pectin " ruban brun" quality methylated around 70%, dissolved at 0.5% (w/w) in 100 ml buffer solution + 50 ml water at 55°C. After dissolution and cooling, pectin solution is centrifuged 15 minutes at 10 000 rpm and filtrated.
- HCl 0.5N aqueous solution.

**Protocol**

|  | EXPERIMENT | BLANK |
|---|---|---|
| **0.5% Pectin substrate, pH 5.5** | 2.5 ml | 2.5 ml |
| Put in water bath at 45°C | | |
| **Enzyme solution** | 0.5 ml | ) |
| Incubation 10mn at 45°C | | |
| **HCl 0.5N** | 1.0 ml | 1.0 ml |
| **Enzyme solution** | | 0.5 ml |
| Optical density at 235nm of sample in quartz 1cm vial | | |

**Calculation**

Specific molar absorbance of product $\Delta$ 4,5 unsaturated is $5.55 \times 10^3$

Pectin lyase activity

$$= (4 \times \Delta DO \times F)/(5.55 \times 10 \times 0.5) = 0.144 \times \Delta DO \times F$$

**4 =** Final volume of reactional medium (in ml)
$\Delta$ **Optical Density =** experiment O.D. - blank O.D. at 235nm
**F =** Dilution factor of the assayed solution
**5.55 =** Absorbance of 1 mol $\Delta$ 4,5 unsaturated
**10 =** Time of reaction (in minutes)
**0.5 =** Volume of enzyme solution in reaction medium (in ml)

**EXAMPLES**

**Example 1 The preparation of a high activity pectin lyase preparation**

The fermentation broth of a strain of Aspergillus niger which is genetically modified and therefore shows an overexpression of one or more pectin lyase genes is dried and granulated in an atomising multi-effects tower. Granulation takes effect at the same time by the recycling and agglomeration of the fine particles which arise from the cyclones in atomisation. The carrier and diluting dry agent is maltodextrin (dextrose equivalent = 12). The granulate consists of 80-90% of dry enzyme extract and 10-20% maltodextrin carrier. It comprises at least 8000 pectin lyase units per gram of dry material.

**Example 2 The preparation of a fruit juice concentrate**

Apples (storage period 4-6 weeks) are washed and crushed before the addition of the granulate of Example 1. After incubation of approximately 60-90 minutes at 20° C, the enzyme treated fruit pulp is pressed to obtain the raw juice. The resulting raw juice (yield 96% (w/w)) is transferred to a pressurisation tank which is associated to a flotation tank and ancilliary equipment, including an aspirator. The juice is subjected to a pressure of 6 bar using air as a pressurisation gas. The total juice volume is pressured batch-wise in a pressurisation tank for about 2 minutes at a temperature of about 50° C. After pressurisation, the juice is combined with the remainder of the juice in the holding tank, whereafter a new batch from the juice in the flotation tank is led into the pressurisation tank followed by 2 minutes of pressurisation. This recirculation is carried out for at least 15 minutes in total and leads to a molecular oxygen content of the juice in the holding tank of between 5 and 6 ppm.

The pressurised juice is led batchwise into a flotation tank (via the pressurisation tank). While feeding the juice in the flotation tank, gelatine is added at 10-20 grams per hectolitre. During flotation, insoluble particles (lees) are removed from the surface of the juice using an aspirator. This juice fraction is filtered using a vacuum filter subsequently pre-concentrated until 20-22° Brix. This pre-concentrate is subjected to ultrafiltration (membrane cut-off 100 kDa) and the ultrafiltrate is concentrated to 70° Brix.

**Claims**

1.   A process for preparing a fruit juice concentrate, which process comprises:

 -   adding a high activity enzyme preparation which comprises at least 8000 pectin lyase units per gram of dry material to crushed fruit
 -   pressing the crushed fruit to separate off a raw juice fraction
 -   optionally, subjecting the raw juice fraction to pressurisation
 -   followed by filtration and concentration of the juice fraction to a desired Brix value

2.   A process for preparing a fruit juice, which process comprises diluting a juice concentrate as obtained in claim 1 to a desired Brix value.

3.   A process according to claim 1 or 2, wherein the enzyme preparation further comprises a pectin esterase, a polygalacturonase or an arabinosidase.

4.   A process according to claims 1-3, wherein the high activity enzyme preparation is in the form of a granulate.

5.   A process according to claims 1-4, wherein the high activity enzyme preparation was produced using a genetically modified organism.

6.   A process according to claims 1-5, wherein the genetically modified organism is a fungus.

7.   An enzyme preparation comprising at least 8000 units of pectin lyase.

8.   An enzyme preparation according to claim 7 which further comprises a pectin esterase, a polygalacturonase or an arabinosidase.

9.   An enzyme preparation according to claim 7 or 8 wherein the enzyme preparation is in the form of a granulate.

10.   The use of an enzyme preparation according to claims 7-9 in the preparation of a fruit juice concentrate or fruit juice.

**European Patent Office**

# EUROPEAN SEARCH REPORT

Application Number

EP 01 00 0112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 013 179 A (DSM NV) 28 June 2000 (2000-06-28) | 7,8,10 | A23L1/03 A23L1/0524 |
| Y | * page 3, line 37 - line 55; claims 1-3,5-7,14; table 1 * | 1-6,9 | A23L1/06 A23L1/24 A23L1/28 |
| Y | SPAGNA GIOVANNI ET AL: "Immobilization of a pectinlyase from Aspergillus niger for application in food technology." ENZYME AND MICROBIAL TECHNOLOGY, vol. 17, no. 8, 1995, pages 729-738, XP001005611 ISSN: 0141-0229 * page 729, column 1, paragraph 1 - column 2, paragraph 1 * * page 731, column 2, paragraph 2 - paragraph 3 * * page 733, column 1, paragraph 2; tables 1-3 * | 1-6,9 | A23L2/02 A23L2/04 A23L2/08 A23L2/52 A23L2/84 |
| Y | WHITAKER J R: "Pectic substances, pectic enzymes and haze formation in fruit juices." ENZYME AND MICROBIAL TECHNOLOGY 1984 DEP. OF FOOD SCI. & TECH., UNIV. OF CALIFORNIA, DAVIS, CALIFORNIA 95616, USA, vol. 6, no. 8, pages 341-349, XP001005612 * page 347, column 1, paragraph 2 - page 348, column 2, paragraph 2; figures 6,7 * | 1-3,5,6 | **TECHNICAL FIELDS SEARCHED (Int.Cl.7)** A23L |
| A | CHESSON A: "A review. Maceration in relation to the post-harvest handling and processing of plant material." JOURNAL OF APPLIED BACTERIOLOGY 1980 ROWETT RES. INST., BUCKSBURN, ABERDEEN AB2 9SB, UK, vol. 48, no. 1, pages 1-45, XP001005380 * page 28, paragraph 4 - page 30, paragraph 1 * | 1-10 | |

The present search report has been drawn up for all claims

| Place of search | Date of completion of the search | Examiner |
|---|---|---|
| MUNICH | 26 June 2001 | Vernier, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 00 0112

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2001

| Patent document cited in search report | Publication date | Patent family member(s) | Publication date |
|---|---|---|---|
| EP 1013179 A | 28-06-2000 | BR 9905988 A | 14-11-2000 |

EPO FORM P0459